(19) Europäisches Patentamt
European Patent Office
Office européen des brevets

(11) EP 3 343 547 A1

(12) EUROPEAN PATENT APPLICATION

(43) Date of publication:
04.07.2018 Bulletin 2018/27

(51) Int Cl.:
G09G 3/30 (2006.01)     G09G 3/3208 (2016.01)

(21) Application number: 17210570.2

(22) Date of filing: 26.12.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 29.12.2016  GB 201622347

(71) Applicant: Barco N.V.
8500 Kortrijk (BE)

(72) Inventor: CHESTERMAN, Frédérique Stephen
John
B-9050 Ledeberg (BE)

(74) Representative: IPLodge bvba
Technologielaan 9
3001 Heverlee (BE)

(54) **METHOD AND SYSTEM FOR MANAGING AGEING EFFECTS IN LIGHT EMITTING DIODE DISPLAYS**

(57) The present invention provides a method and system for adapting driving levels of pixels in a display after aging, to maintain display performance. The method comprises obtaining experimental values from the display, fit the model parameters using the experimental values, using the model to calculate an optical output of pixels after aging, and update the pixel driving levels accordingly.

A

Figure 5

EP 3 343 547 A1

**Description**

**Field of the invention**

The present invention relates to systems and methods for managing aging of Light Emitting Diode displays.

**Background**

It is known that temperature can have a permanent impact on the performance of LED (Light Emitting Diode) displays over time. Aging (including effects of temperature) of a pixel can be described as the permanent decrease in (pixel) luminance (nits, or $Cd/m^2$) as a result from the pixel being driven while being submitted to a temperature above its normal operating temperature. The luminance can be decreased for example due to charges getting trapped and no longer contributing to the emission process. The occurrence of these trapping events can increase with temperature and driving level.

Aging can cause a permanent change in the light output of a pixel for example:

a) The permanent decrease in efficiency of the LED can be expressed as a function of operating time, current density and temperature.
b) The permanent positive/negative shift in threshold voltage of a driving a TFT (Thin Film Transistor) for positive gate bias (pixel active) or negative gate bias (pixel inactive) can be expressed as a function of operating time, gate voltage (~pixel intensity) and temperature.

Each pixel in an LED display is a separate light source that can be driven independently from the other pixels. The driving levels can correspond to the content of the applied image. The losses (in Watts) in a pixel can be expressed as a function of driving level. Therefore, at locations where pixels are driven at a high driving level, a local temperature peak can arise. Additionally, heat can be drained more easily in the edges than in the centre of the display and thus causing a higher temperature in the centre. So the temperature distribution across an LED display during operation is typically not uniform, which can cause local deteriorating effects. Local changes in brightness are more visible than overall uniform changes. Thus, a local permanent change in light output, or "screen burn-in", will limit the lifetime and performance of the display faster. Also, the ambient temperature during operation can change over time. This may cause light output to decrease faster at one moment than at another moment.

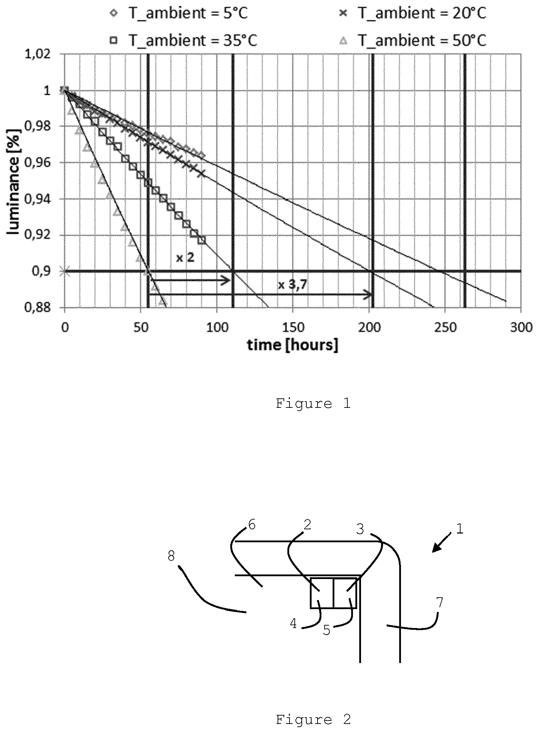

Figure 1 shows the result of pixels being driven at DDL (0,0,255) for 100 hours at four different ambient temperatures, 5, 20, 35 and 50 degrees C. The decrease in light output is stronger at high ambient temperatures than at low temperatures. This can be a combined result of the decrease in efficiency of the LED and the positive shift in threshold voltage of the driving TFT (Thin Film Transistor).

Patent US9058769B2 discloses a method for compensating ageing effects of pixels in an LED display. An optical sensor is placed on the front side of the display and measures the (multispectral) luminance output in ambient temperature in one area. The light output is measured and used to compensate the non-uniformity of the light output.

**Summary**

In one aspect aspect of the present invention there is provided a stream processor based method for adapting driving levels of a display having an active area comprising at least two test areas, temperature control means, and optical sensor means, the method comprising the steps of defining a model, and updating the pixels, the step of defining a model comprising, during a time t1, providing driving levels to the at least two test areas while keeping the test areas at different temperatures, then for each test area, measure the temperature and optical output and fit a model of the optical output to the measured temperature, measured optical output, driving level and time t1,

and the step of updating the pixels, comprising for all pixels in the active area outside the test areas, obtain the driving level and temperature after time t2 and insert them into the model and calculate an optical output, use the calculated optical output to calculate a new driving level, instruct the display to provide the new driving level to the pixels in the active area outside the test areas.

This has the advantage of providing a model that takes into account different aging times at different temperatures and different driving levels. The model enables an improved prediction of the required pixel driving levels.

The method step of defining a model can be performed in parallel with the step of updating the pixels.

This has the advantage of letting the model be defined without having to interrupt the updating of the pixel driving levels or the normal display operation.

The method step of updating the pixels can be repeated during a time t3, t3>t2, and measured values can be collected in histograms implemented with binning.

This has the advantage of increasing the statistical material to improve accuracy. Since this also means increasing the amount of points, binning can be used to reduce the amount of memory required to store all the points.

The temperature difference between the test areas can be between 5 and 50 degrees C.

This has the advantage that all temperature points that are expected to be of interest can be covered in the model.

The calculated optical output can be expressed as Output(time) = Output(initial) exp[(-time/B)^tau], wherein Output (initial) is the optical output before aging, time is the accumulated time, B is a constant and tau is a stretching exponent, 0≤tau<1. Additionally, B can be obtained by fitting measured points of optical output at different points in time and for different driving levels and temperatures, to stretched exponential functions according to Measured optical output = Constant exp[(-time/B)^tau], 0≤tau<1. This has the advantage of that we can use a model to predict the optical output after a certain aging time in a certain temperature at a certain driving level. Additionally the accuracy of the model can be improved by fitting it to experimental data.

The method can comprise calculating new driving by inversing the display transfer function and insert the old driving levels and the calculated optical output.

This has the advantage that the required driving levels can be calculated so that the display provides the optical output required, also after aging. The model can provide an appropriate optical output for each pixel without having access to experimental values for each pixel.

The method can comprise assigning new driving levels in a GPU (Graphics Processing Unit).

The method can comprise using a pre-defined set of parameters as initial values.

This has the advantage of providing appropriate initial values.

The method can comprise converting RGB driving levels to WRGB (White, Red, Green, Blue) sub-pixel driving levels using four color channels, before inserting them into the model.

This has the advantage of being able to use the method also for WRGB displays.

The step of updating the pixels can comprise measuring the driving levels and temperatures at least once per second.

This has the advantage of having sufficient amount of data points so that accurate values can be provided to the aging model.

The method can comprise implementing new driving levels by applying a LUT for each color channel.

This has the advantage of that each pixel obtains individual compensation on sub-pixel level.

The method can comprise measuring the optical output by pointing an external optical sensor in the direction of the display, at a distance to the display surface, or in contact with the display surface.

This method can for example be used for factory calibration.

The method can comprise initially using only a sub-part of the driving level range, for example the driving levels corresponding to 0 - 50% of the maximum luminance.

This has the advantage of that there can be a margin of driving levels foreseen so that the maximum driving level can be increased to compensate for aging.

The method can comprise instructing the display to, for all pixels, reduce the maximum luminance level available, throughout the display lifetime.

This has the advantage that the lifetime of the display may be extended.

A system for compensating aging of a display having an active area comprising at least two test areas, temperature control means, and optical sensor means, wherein the driving levels of pixels outside the test areas are based on accumulated driving levels and temperatures of pixels inside the test area.

This has the advantage of enabling to model aging, taking temperature of the individual pixels into account.

The system can comprise that the resolution of the temperature sensor means is lower than the pixel resolution.

This has the advantage of limiting the amount of temperature sensors.

The system can comprise that the optical output is luminance.

The system can comprise that the temperature control means comprises a grid of temperature sensors. Additionally, the means for temperature control can be Peltier elements.

The system can comprise a controller and/or a GPU to perform any of the method steps of the present invention.

## Brief description of drawings

Figure 1 shows an example of display luminance as a function of time, at different temperatures.

Figure 2 shows an embodiment of the present invention comprising a sensor for optical measurements put next to a display bezel, and at least two test areas kept a different temperatures.

Figure 3 shows the decrease in luminance due to aging.

Figure 4 shows display luminance as a function of aging time for a) different driving levels, and b) for different temperatures.

Figure 5 shows an embodiment of the present invention comprising a surface function expressing the relationship between B (the time constant of an exponential function) and both temperature and driving levels.

Figure 6 shows an embodiment of the present invention comprising a table with parameters of a fitted function as in figure 4.

Figure 7 shows an embodiment of the present invention comprising a flow chart describing the model update.

Figure 8 shows an embodiment of the present invention comprising a flow chart describing the pixel driving update.

Figure 9 shows an embodiment of the present invention comprising a table comprising the values collected for the pixel driving update.

Figure 10 shows an embodiment of the present invention comprising binning of the driving levels.

Figure 11 shows an embodiment of the present invention comprising a plot of luminance as a function of driving levels.

Figure 12 shows the layout of a display system.

**Definitions**

"Aging" can be expressed as the loss of pixel luminance after the pixel has been driven at a certain digital driving level while being submitted to a temperature above its normal operating temperature for a certain amount of time.

A "display" is considered to be a physical display device (e.g., a display for displaying two-dimensional content, a display for displaying three-dimensional content, a medical grade display, a high-resolution display or any combination of the above. A Light Emitting Diode (LED) display or an Organic Light Emitting Diode (OLED) display, can be any of the above mentioned displays configured so that each pixel can emit its own illumination light.

An "active area" comprises all pixels on the display that can form an image.

An "operational area" is a collection of pixels that is part of the active area and that is visible to the user.

A "test area" is a collection of pixels that is part of the active area but is not part of the operational area.

A "digital driving level" or "DDL" is a unit less entity related to the input given to a display to produce e.g. luminance. Hence, DDL can used by the skilled person as an expression of the intensity of the light output of a (sub-)pixel or color channel.

A "transfer function" is known by the skilled person as a relationship between digital driving level and luminous output of a display. This can for example be described by a "gamma function".

**Detailed description of the illustrative embodiments**

The present invention provides means and methods to compensate for the difference in optical losses between pixels across the display caused by e.g. temperature variations across the display, using a model approach. The model can describe the decrease of optical output as a function of temperature, driving level and aging time. When the optical losses are known, they can be used to calculate an "LUT that describes the required compensation for each pixel" of the display.

Experimental values of optical output, temperature, driving level, and operation time can be collected and used to fit the parameters of the model. The collection of values can run on separate test pixels having the same characteristics as the pixels the user interacts with when working using the display to perform the daily tasks. In doing so, the collecting of values can run in parallel with the actual operation of the display, and a model can be obtained involving the same operating time (or aging time) as the operating pixel that should be modelled.

Figure 2 shows an embodiment of the present invention comprising a display 1 having a bezel 7 and an active area 8. The active area 8 comprises two test areas 2 and 3 and an operational area 6. The sensors 4 and 5 can be positioned in front of the display surface or directly on top of it. They can further be positioned close to the bezel 7 or partly or fully under it, if the active area extends under the bezel. The test areas 2 and 3 have the same characteristics as the operational area 6, but are not part of it. A user would interact only with the operational area 6 when working with the display. The optical output of the test areas 2 and 3 can be measured with the optical sensors 4 and 5. The optical output can be measured simultaneously in the two test areas 2 and 3. The sensors 4 and 5 can be configured to measure for example luminance. During the measurement, test area 2 can be kept at a different temperature than test area 3. The temperature control can be implemented by e.g. using heaters and Peltier elements (not shown).

The overall procedure can be divided into two main parts: 1) Construction and improvement of the model using the obtained values from pixels in the test areas, and 2) using the modelled output loss to adjust the operational pixels to emit the required optical output. The two processes can run in parallel, which makes it possible to provide a model where the temperature, driving level and aging time of the test pixels are very close to the corresponding values of the operating pixel to be modelled.

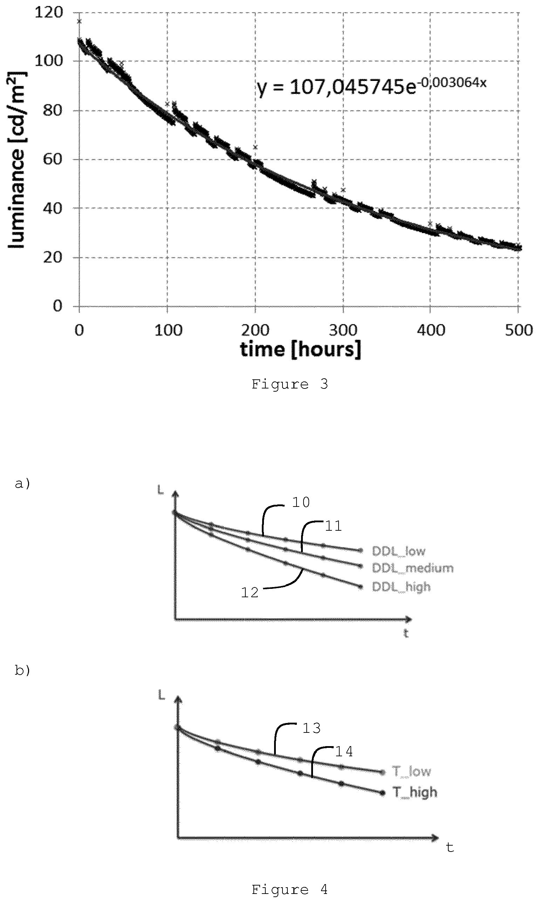

Figure 3 shows the measured decrease in light output for a pixel driven at a high driving level. A stretched exponential function can be fitted on top of the measurement curve to follow the same trend as the measured data.

Based on figure 3 it can be assumed that the decay in luminance can be described by a stretched exponential function. Therefore an exponential model is proposed:

$$L = A \exp [(-t/B)^{\wedge}tau], \quad 0{\leq}tau{<}1 \qquad (1)$$

$$B = f(DDL, T) \qquad (2)$$

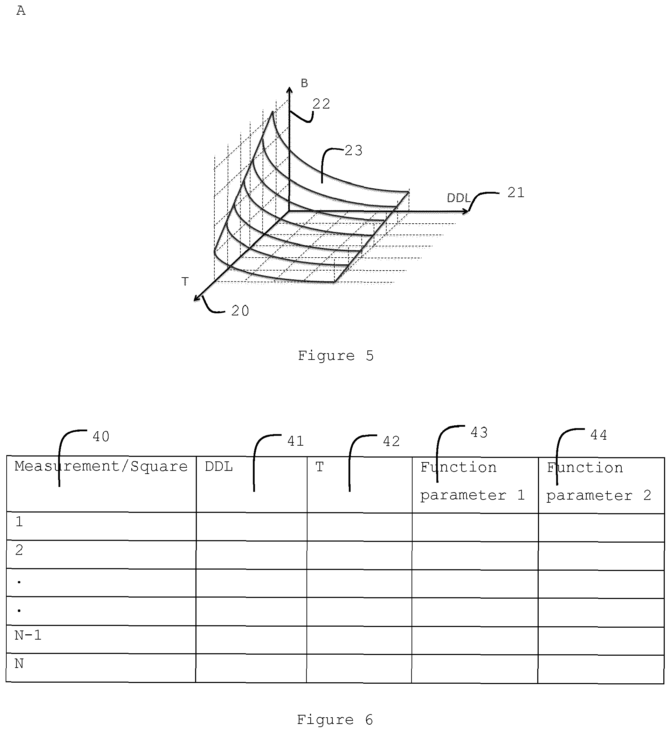

Where L is the luminance, A is a parameter to be fitted, t is aging time, B a function describing the joint variation of driving level and temperature (shown in figure 5).

Figure 4 shows an embodiment of the present invention showing the measured luminance as a function of aging time (the dots) for 4a) low 10, medium 11 and high 12 driving levels (at a fixed T), and for 4b) low 13 and high 14 temperature (at a fixed driving level).

The measurement data points in Figures 4a and 4b can be fitted to a stretched exponential functions of the form

$$A = C \exp[(-t/B)^{\wedge}tau], \quad 0{\leq}tau{<}1.$$

The time constant B can be extracted from these functions and plotted as a surface for each DDL and each T. The result is shown in Figure 5. This relation can be used to describe the total loss of luminance for a pixel as a function of aging time, DDL and T. The parameters B can be listed in a matrix as in figure 6 where the columns can be the measured parameters, e.g. the optical output 40, the driving level 41, the temperature 42 and then the one or more fitted parameter(s), e.g. 43 and 44. The parameters can be obtained by fitting an exponential function involving one parameter, or a stretched exponential function involving two parameters. It can be beneficial to populate the matrix with start values that are fairly representative for a real situation. For example, the optical output at different locations of the operational part of the display can be measured before and after aging at a known temperature and for a known duration. The initial measurements can be performed by conventional measurement equipment, for example by pointing an external sensor towards the display while running a test pattern on it. The exponential functions (or other type of appropriate functions) can then be fitted to the obtained values. One could also use measurement data from measurements on a different display with similar characteristics.

The construction and improvement of the model can comprise the following steps.

a) Choosing a model (function) for the optical loss of a pixel as a function of driving level, temperature and aging time. This model can be obtained e.g. through measurements on the display before operation, or can be a generic model for this type of display.
b) Driving test area pixels according to a specific test pattern of driving levels and temperatures during (aging) time t.
c) Measure the optical output of each pixel in the test areas at different moments in time.
d) Add the obtained optical outputs, temperatures, driving levels and aging time, to the existing data (matrix, cfr. figure 6), fit new functions and extract function parameters, and fit a new surface (cfr. figure 5) to this updated set of parameter data.

It is beneficial if the temperatures chosen in step b) covers the complete operating temperature range of the display, for example the temperature difference between the sensors can be between 5 and 50 degrees C. Referring to figure 2, the area 2 can for example be kept at a temperature below the nominal or below minimal operating temperature of the display and the area 3 can be kept at a temperature above the nominal or above maximal operating temperature of the display. In this way all possible temperatures of the operational pixels can be covered in the model. The model can be improved by adding further temperature points, for example the system can comprise three or four test areas kept at different temperatures.

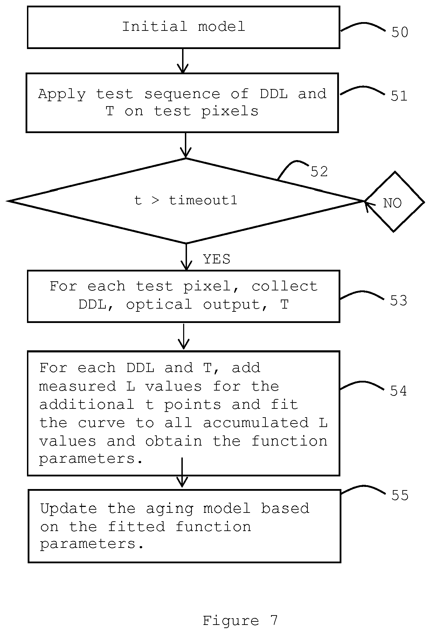

Figure 7 shows a flowchart that illustrates an embodiment of the present invention comprising construction, or fitting, and improvement of the model. Initial values of the model matrix can be provided in step 50. In step 51, an aging test pattern of DDL and T is applied to age the pixels. In step 52 the pattern resides onto the test areas until t>timeout1, then all pixels in the test areas are turned off before starting the measurements. In step 53 the collecting of parameters is started. One pixel at the time can be lit and its optical output, the temperature it was submitted to during aging and driving level it was kept at during aging, is obtained. In step 54, for each DDL and T, add the measured L values for the additional t points and fit the curve to all accumulated L values and obtain the function parameters. Since the luminance curve is a function of time, points with a certain DDL and T obtained at a later time will be unique points that can be added to the measured curve to improve fitting. In step 55, the aging model (surface, cfr. figure 5) can be updated/improved based on the fitted function parameters.

The aging model can now be used to adjust the operational pixels for changes in optical output. For each pixel, during operation, driving levels and temperatures are stored in histograms. The number of bins in the histogram can be high or low, depending on the required correction accuracy and the available memory. The number of driving level bins can be equal to the number of unique driving levels, e.g. 256. The number of driving level bins can also be lower, e.g. 8 or 16 to limit space required in memory. Furthermore, the mapping from driving level to bin can be such that a larger number of driving levels is mapped to one bin and a smaller number of driving levels is mapped to another bin. E.g. in case of 8 bins, one could map driving levels 0 to 99 to bin 1 and driving levels 240 to 255 to bin 8. Binning for temperature could be achieved by rounding measured temperatures to integer values.

e) For a duration t and for all pixels in the operational area, collect driving levels and temperatures and store in 2-dim. histograms per pixel.

f) When t has passed, stop collecting data, and for each pixel, insert the accumulated data of the histogram into the model. If binning is used, a value has to be chosen to represent each bin, for example the value in the middle of each bin. Thus, for each pixel, insert the representative value of the temperature, driving level and aging time into the model and calculate the expected decrease in luminance for each pixel. The function can be normalized with the initial luminance so that the decrease can be expressed in percent.

g) The transfer function of the display can be a gamma function, for example, a gamma 2.2 function:

$$L = f(DDL) = 1000*(DDL/255)^{2.2} \qquad (3)$$

The transfer function can be inverted to obtain the DDL as a function of the luminance:

$$DDL = f^{-1}(L) = sqrt^{2.2}(L/1000)*255 \qquad (4)$$

A display panel with a maximum light output $L_{max}$ of e.g. 1000 cd/m$^2$ may be calibrated for a maximum light output $L_{cal}$ of e.g. 500 cd/m$^2$ by limiting the range of used driving levels. This can be done for example through the use of a LUT. The highest used driving level may be set to $DDL_{cal,1}$, as in formula (5),

$$DDL_{cal,1} = f^{-1}(L_{cal}) = sqrt^{2.2}(L_{cal}/1000)*255 \qquad (5)$$

to obtain the required calibrated light output $L_{cal}$. A display may for example be calibrated for a maximum light output of 500 cd/m$^2$ by using a LUT that maps DDL (255,255,255) onto DDL (186, 186, 186) .

The calibrated light output $L_{cal}$ may decrease to a lower light output $L_{aged,1}$ as a result of aging. One can calculate what driving level $DDL_{cal,2}$ is needed in order to maintain the original calibrated maximum light output $L_{cal}$, through formula (6)

$$DDL_{cal,2} = f^{-1}(L_{cal}/L_{aged}) = sqrt^{2.2}(L_{cal}(L_{cal}/L_{aged})/1000)*255 \qquad (6)$$

As luminance parameter, insert the wanted luminance $L_{cal}$, normalized (divided) with the percentage of luminance $L_{aged}/L_{cal}$ that is left over after aging, and calculate the new driving level $DDL_{cal,2}$ to maintain calibrated luminance $L_{cal}$. For example, a calibrated light output $L_{cal}$ of 500cd/m$^2$ may decrease to a light output $L_{aged,1}$ of 400 cd/m$^2$ because of aging. According to formula (5) one needs to increase the maximum driving level from $DDL_{cal,1}$ of (186,186,186) to $DDL_{cal,2}$ of (206,206,206) to maintain the calibrated luminance $L_{cal}$.

The construction and improvement of the model, steps a)to d), can run in parallel with the normal operation of the display or the pixel update of the display, steps e) to g). It can be beneficial if the model construction and fitting of the model lies somewhat ahead in time in respect to the operational pixel update, so that the aging times of the operational pixels are available when needed. It is also possible to use interpolation between the available points. But there is no further requirement that the model construction synchronizes with the operational pixel update.

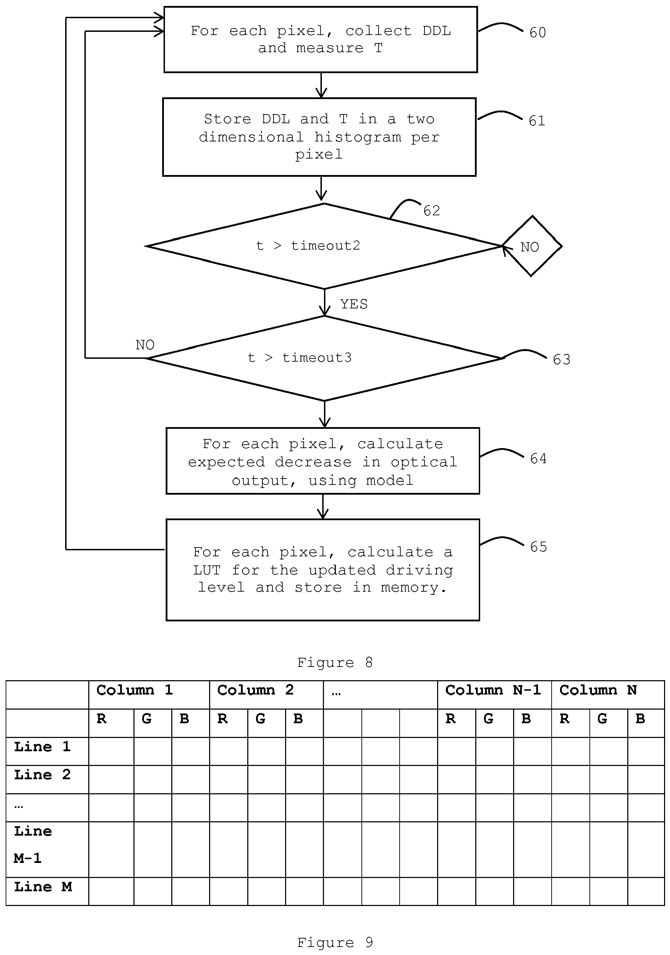

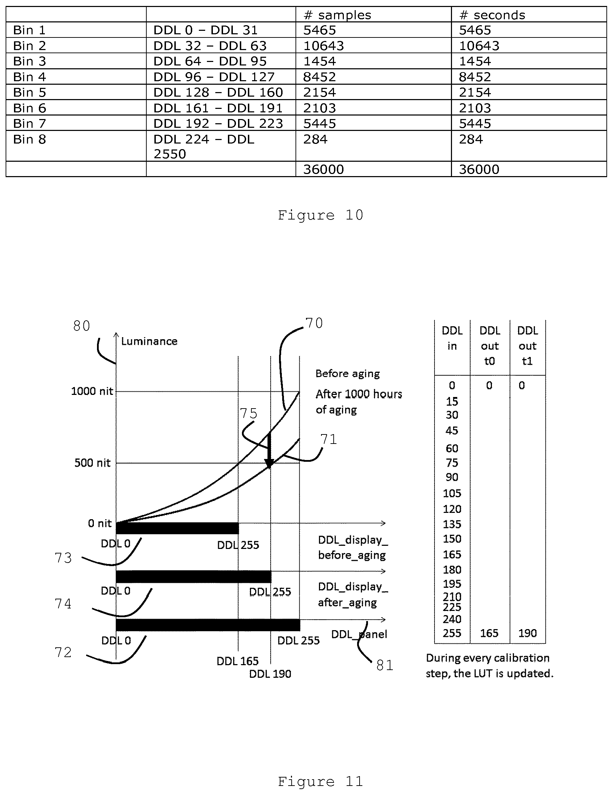

Figure 8 shows a flow chart describing one embodiment of the present invention comprising how to adjust the operational pixels. In step 60, the DDL and temperature is collected for each pixel at a certain point in time, and in step 61 these values are stored in a (two-dimensional) histogram. In step 62, this collecting of values is restarted after a period timeout2, for example a second. Step 62 can be restarted until the accumulated time reaches timeout 3, in step 63. Thus, in the example, once per timeout2 duration, the complete screen content is grabbed. The acquired information can be a matrix who's size is equal to the screen resolution of the display times the number of color channels. For example, if e.g. RGB is used (3 channels) in a display with resolution MxN, the size of the table will be MxNx3, for each parameter (e.g. DDL or temperature). An example is given in figure 9 having where the DDL of the whole screen of size MxN, and with R, G and B colour channels, can be grabbed at a certain time interval, to populate the table. The pixel driving levels can be stored in a histogram, one level per pixel and per color channel so that a pixel driving history of the pixel can be obtained. To maintain reasonable memory requirements, binning may be employed, see an example of binning the DDL levels in figure 10 where values have been collected once per second. For the calculations, one value per bin can be used, for example the value in the middle of each bin.

The total decrease in luminance, L(total), of a pixel may then be calculated as a function of DDL using the equations (1), (2) and the collected histogram in figure (10). The cumulative decrease over all bins can be calculated as:

```
1-L(total)=L(timeslot)/L(0) = exp[(-t1,1/B1,1)^tau] exp[(-
t2,1/B2,1) ^tau]  … exp[(-t8,1/B8,1)^tau] … exp[(-t2,1/B2,1)^tau]
… exp[(-t7,8/B7,8)^tau]  … exp[(-t8,7/B8,7)^tau]  exp[(-
t8,8/B8,8)^tau]
```

Where L(timeslot) is the cumulated luminance after time timeslot, L(0) is the initial luminance, B1,1 to B8,8 are the parameters for aging at a DDL equal to bin1 to bin8 and a temperature equal to bin 1 to bin 8 respectively, and t1 to t8 is the time duration the pixel was driven at bin1 to bin8 respectively.

Step 63 comprises checking a time limit timeout3 for ending the collection of pixel parameters. When this limit is reached, step 64 comprises implementing the collected DDL and T in the model to calculate expected decrease in optical output. This decrease can be used to obtain the updated transfer function, and finally in step 65 calculate the corrected DDL, as described in equation (5).

Since aging of LED displays are known, it is common to initially only use a part of the available DDL range of the display, in order to be able to add DDLs when the display has started to age. Figure 11 shows an embodiment of the present invention comprising the initial transfer or gamma function 70 for a display with luminance (in nits) on the y axis 80 and DDL on the x axis 81. The drop in luminance due to aging can be represented by the arrow 75. Since the drop can be normalized to a percentage, a new curve 71 can be drawn. 71 represents the "aged" transfer curve when the pixel has been aged for a known amount of time at a known series of temperatures and a known series of DDL's. For example: Curve 70 shows that before aging the display needs 165 DDLs to provide 500 nits. After aging, curve 71 shows that a DDL of 190 is needed for the display to provide 500 nits. Since aging of the display is known to happen, it is common to initially map the required driving levels onto a limited range of the display, in order to have spare levels available when compensation is needed. For example, in figure 9, note the full display range 72 of driving level 0 to 255. Initially, the range 0 to 255, can be mapped onto only a part of the full range 72, as in mapped range 73. After aging, the range might need to be extended e.g. to mapped range 74, so that the higher luminance levels can still be obtained.

Some LED displays may use a configuration comprising four subpixels per pixel, white, red, green and blue respectively (WRGB). For this configuration, it is required to convert red, green, blue driving level into white, red, green, blue sub-pixel driving. Additionally, 3 color channels need to be extended to 4 color channels throughout the complete algorithm, for example in the table in figure 9.

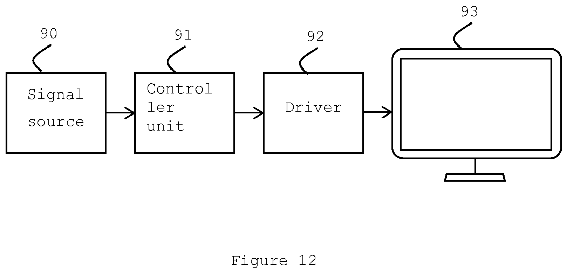

Figure 12 shows the schematics of a display system on which the present invention can be implemented. The system comprises a system signal source 90, a controller unit 91, a driver 92 and a display 93. The controller unit 91 may comprise a GPU (Graphics Processing Unit). A GPU can in general terms be called a stream processor since it can operate in parallel by running one kernel on many records in a stream at once.

## Claims

1.  A stream processor based method for adapting driving levels of a display having an active area comprising at least two test areas, temperature control means, and optical sensor means, a mathematical model, having been defined, the method comprising the steps of fitting the model, and updating the pixels, the step of fitting the model comprising, during a time t1, providing driving levels to the at least two test areas while keeping the test areas at different temperatures, then for each test area, measure the temperature and optical output and fit a model of the optical output to the measured temperature, measured optical output, driving level and time t1, and the step of updating the pixels comprising, for each pixel in the active area outside the test areas, obtain the driving level and temperature after time t2 and insert them into the model and calculate an optical output, use the calculated optical output to calculate a new driving level, instruct the display to provide the new driving level to the pixel.

2.  A method according to claim 1 wherein the step of fitting a model and the step of updating the pixels are performed in parallel.

3.  A method according to any of the above claims wherein the step of updating the pixels is repeated during a time t3, t3> t2, and measured values are collected in histograms implemented with binning or wherein the step of updating the pixels comprises measuring the driving levels and temperatures at least once per second.

4.  A method according to any of the above claims wherein the temperature difference between the test areas is between 5 and 50 degrees C.

5.  A method according to any of the above claims wherein the calculated optical output is expressed as Output(time) = Output(initial) exp[(-time/B)^tau], wherein Output(initial) is the optical output before aging, time is the accumulated time, B is a constant and tau is a stretching exponent, 0≤tau<1 or wherein the optical output is measured by pointing an external optical sensor in the direction of the display, at a distance to the display surface, or in contact with the display surface.

6.  A method according to claim 5 wherein B is obtained by fitting measured points of optical output at different points in time and for different driving levels and temperatures, to stretched exponential functions according to Measured optical output = Constant exp[(-time/B)^tau], 0≤tau<1.

7.  A method according to any of the above claims wherein the new driving levels are calculated by inversing the display transfer function and insert the old driving levels and the calculated optical output or wherein new driving levels are implemented by applying a LUT for each color channel or wherein the assignment of new driving levels is performed in a GPU.

8.  A method according to any of the above claims wherein the model uses a pre-defined set of parameters as initial values.

9.  A method according to any of the above claims wherein RGB driving levels are converted to WRGB sub-pixel driving levels using four color channels, before inserting them into the model.

10. A method according to any of the above claims wherein initially a sub-part of the driving level range is used, for example the driving levels corresponding to 0 - 50% of the maximum luminance, or
    further comprising instructing the display to, for all pixels, reduce the maximum luminance level available, throughout the display lifetime.

11. A system for compensating aging of a display having an active area comprising at least two test areas, temperature control means, and optical sensor means, wherein the driving levels of pixels outside the test areas are based on accumulated driving levels and temperatures of pixels inside the test area.

12. A system according to claim 11 wherein the resolution of the temperature sensor means is lower than the pixel resolution.

13. A system according to any of claims 11 and 12 wherein the optical output is luminance.

14. A system according to any of claims 11 to 13 wherein the temperature control means comprises a grid of temperature sensors or Peltier elements.

15. A system according to any of claims 11 to 14 comprising a controller or a GPU for performing the method of any of claims 1 to 10.

Figure 1

Figure 2

Figure 3

Figure 4

A

Figure 5

| Measurement/Square | DDL | T | Function parameter 1 | Function parameter 2 |
|---|---|---|---|---|
| 1 | | | | |
| 2 | | | | |
| . | | | | |
| . | | | | |
| N-1 | | | | |
| N | | | | |

Figure 6

```
           ┌─────────────────────────────┐
           │        Initial model        │─────╮  50
           └─────────────────────────────┘     ╰
                          │
                          ▼
           ┌─────────────────────────────┐
           │  Apply test sequence of DDL │─────╮  51
           │       and T on test pixels  │     ╰
           └─────────────────────────────┘
                          │
                          ▼
                  ╱─────────────╲                 ╮ 52
                ╱                 ╲         ╱╲
               ╱   t > timeout1    ╲──────▶  │ NO
                ╲                 ╱         ╲╱
                  ╲─────────────╱
                          │ YES
                          ▼
           ┌─────────────────────────────┐
           │ For each test pixel, collect│─────╮  53
           │   DDL, optical output, T    │     ╰
           └─────────────────────────────┘
                          │
                          ▼
           ┌─────────────────────────────┐
           │ For each DDL and T, add     │
           │ measured L values for the   │─────╮  54
           │ additional t points and fit │     ╰
           │ the curve to all accumulated│
           │ L values and obtain the     │
           │ function parameters.        │
           └─────────────────────────────┘
                          │
                          ▼              ╮  55
           ┌─────────────────────────────┐
           │ Update the aging model based│─────╮
           │ on the fitted function      │     ╰
           │ parameters.                 │
           └─────────────────────────────┘
```

Figure 7

For each pixel, collect DDL and measure T — 60

Store DDL and T in a two dimensional histogram per pixel — 61

62 — t > timeout2 — NO

YES

NO — t > timeout3 — 63

For each pixel, calculate expected decrease in optical output, using model — 64

For each pixel, calculate a LUT for the updated driving level and store in memory. — 65

Figure 8

|  | Column 1 | | | Column 2 | | | ... | | | Column N-1 | | | Column N | | |
|---|---|---|---|---|---|---|---|---|---|---|---|---|---|---|---|
|  | R | G | B | R | G | B |  |  |  | R | G | B | R | G | B |
| Line 1 |  |  |  |  |  |  |  |  |  |  |  |  |  |  |  |
| Line 2 |  |  |  |  |  |  |  |  |  |  |  |  |  |  |  |
| ... |  |  |  |  |  |  |  |  |  |  |  |  |  |  |  |
| Line M-1 |  |  |  |  |  |  |  |  |  |  |  |  |  |  |  |
| Line M |  |  |  |  |  |  |  |  |  |  |  |  |  |  |  |

Figure 9

|  |  | # samples | # seconds |
|---|---|---|---|
| Bin 1 | DDL 0 – DDL 31 | 5465 | 5465 |
| Bin 2 | DDL 32 – DDL 63 | 10643 | 10643 |
| Bin 3 | DDL 64 – DDL 95 | 1454 | 1454 |
| Bin 4 | DDL 96 – DDL 127 | 8452 | 8452 |
| Bin 5 | DDL 128 – DDL 160 | 2154 | 2154 |
| Bin 6 | DDL 161 – DDL 191 | 2103 | 2103 |
| Bin 7 | DDL 192 – DDL 223 | 5445 | 5445 |
| Bin 8 | DDL 224 – DDL 2550 | 284 | 284 |
|  |  | 36000 | 36000 |

Figure 10

Figure 11

90

Signal
source

91

Control
ler
unit

92

Driver

93

Figure 12

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2011/074750 A1 (LEON FELIPE A [US] ET AL) 31 March 2011 (2011-03-31)<br>* abstract; figures 1A, 1B, 2B *<br>* paragraph [0015] - paragraph [0018] *<br>* paragraph [0038] *<br>* paragraph [0041] - paragraph [0047] *<br>* paragraph [0065] - paragraph [0080]; claims 4,5 * | 2-5,7-15<br><br>6 | INV.<br>G09G3/30<br>G09G3/3208 |
| Y<br><br>A | WO 2008/025985 A1 (CAMBRIDGE DISPLAY TECH [GB]; SMITH EUAN [GB]) 6 March 2008 (2008-03-06)<br>* abstract *<br>* page 13, line 9 - line 15 * | 6<br><br>1-5,7-15 | |
| A | US 7 355 574 B1 (LEON FELIPE A [US] ET AL) 8 April 2008 (2008-04-08)<br>* abstract *<br>* column 9 - column 10; figure 4A * | 1-15 | |
| A | US 2008/055209 A1 (COK RONALD S [US]) 6 March 2008 (2008-03-06)<br>* abstract; figure 1 *<br>* paragraph [0031] * | 1-15 | TECHNICAL FIELDS SEARCHED (IPC)<br><br>G09G |

The present search report has been drawn up for all claims

| Place of search | Date of completion of the search | Examiner |
|---|---|---|
| The Hague | 28 March 2018 | Gonzalez Ordonez, O |

## ANNEX TO THE EUROPEAN SEARCH REPORT
## ON EUROPEAN PATENT APPLICATION NO.

EP 17 21 0570

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2018

| Patent document cited in search report | | Publication date | Patent family member(s) | | Publication date |
|---|---|---|---|---|---|
| US 2011074750 | A1 | 31-03-2011 | CN 102687193 A | | 19-09-2012 |
| | | | EP 2483885 A1 | | 08-08-2012 |
| | | | JP 2013506168 A | | 21-02-2013 |
| | | | KR 20120087138 A | | 06-08-2012 |
| | | | TW 201117171 A | | 16-05-2011 |
| | | | US 2011074750 A1 | | 31-03-2011 |
| | | | WO 2011041224 A1 | | 07-04-2011 |
| WO 2008025985 | A1 | 06-03-2008 | AT 540395 T | | 15-01-2012 |
| | | | CN 101523471 A | | 02-09-2009 |
| | | | EP 2057620 A1 | | 13-05-2009 |
| | | | GB 2441354 A | | 05-03-2008 |
| | | | JP 2010503007 A | | 28-01-2010 |
| | | | KR 20090045404 A | | 07-05-2009 |
| | | | US 2010026725 A1 | | 04-02-2010 |
| | | | WO 2008025985 A1 | | 06-03-2008 |
| US 7355574 | B1 | 08-04-2008 | AT 543174 T | | 15-02-2012 |
| | | | CN 101595519 A | | 02-12-2009 |
| | | | EP 2126883 A1 | | 02-12-2009 |
| | | | JP 5379021 B2 | | 25-12-2013 |
| | | | JP 2010517092 A | | 20-05-2010 |
| | | | US 7355574 B1 | | 08-04-2008 |
| | | | WO 2008091329 A1 | | 31-07-2008 |
| US 2008055209 | A1 | 06-03-2008 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9058769 B2